(19) **Europäisches Patentamt**

**European Patent Office**

**Office européen des brevets**

(11) **EP 1 691 526 A1**

(12) **EUROPEAN PATENT APPLICATION**

(43) Date of publication:
16.08.2006 Bulletin 2006/33

(51) Int Cl.:
*H04L 29/06* (2006.01)   *H04L 12/56* (2006.01)

(21) Application number: 06001762.1

(22) Date of filing: 27.01.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 11.02.2005 KR 2005011616

(71) Applicant: **Samsung Electronics Co., Ltd.**
**Suwon-si, Gyeonggi-Do (KR)**

(72) Inventors:
• **Kim, Kil-Lyeon**
**Yeongtong-gu**
**Suwon-si**
**Gyeonggi-do (KR)**
• **Kang, Byung-Chang,**
**509-404, Jinsan-maeul**
**Yongin-si,**
**Gyeonggi-do (KR)**

(74) Representative: **Lang, Johannes**
**Bardehle Pagenberg Dost**
**Altenburg Geissler Isenbruck**
**Postfach 86 06 20**
**81633 München (DE)**

(54) **Transmission control protocol (TCP) congestion control using multiple TCP acknowledgements (ACKs)**

(57) A method of Transport Control Protocol (TCP) congestion control using multiple TCP AKCs in an integrated network including wireless links, the method including: receiving a packet retransmitted from a correspondent upon a mobile node having a packet loss in a received packet; calculating the number of acknowledgment messages to be transmitted by the mobile node; generating multiple acknowledgment messages according to the calculated number and transmitting the multiple acknowledgment messages to a transmitting node; and increasing a congestion window value corresponding to the multiple acknowledgment messages received by the transmitting node, and executing the TCP transmission.

FIG. 3

CN — 100

MN — 200

**Description**

BACKGROUND OF THE INVENTION

Field of the Invention

The present invention relates to Transmission Control Protocol (TCP) congestion control using multiple TCP Acknowledgements (Acks). More particularly, in a wired-wireless integrated network where a mobile node carries out communication with a wired network server via a TCP connection, the present invention relates to solving problems occurring with conventional TCP congestion control by using multiple TCP acknowledgments in order to prevent performance degradation between TCP terminal nodes owing to packet loss caused by the movement of a mobile node.

Description of the Related Art

In a wired-wireless integrated environment, a Mobile Node (MN) is provided with Internet services such as web and E-mail services via a Transmission Control Protocol (TCP) connection to a wired Correspondent Node (CN) or a server. Mobile IP protocol is used to prevent the flow of the TCP connection from interrupting owing to the mobility of the MN.

As current popularity of MNs is increasing, user demand for Internet services via an MN at any place is also increasing. However, TCP protocol widely used for data transmission between an MN and a CN is designed merely considering a wired network or a stationary node, which has a relatively low packet loss rate. Thus, when used in a wireless network or a wired-wireless integrated network in which performance is poor, end-to-end latency is long, and packet loss takes place frequently during hand-off owing to a high packet loss rate, TCP protocol contains several problems such as performance degradation between nodes.

Conventional TCP protocol has been designed considering a wired or fixed network. In existing wired networks, the packet loss rate is low and interruption takes place less frequently. So, packet loss in the wired network is caused mostly by congestion owing to, for example, buffer overflow in an intermediate node of the network. Accordingly, TCP protocol executes a congestion control algorithm such as slow start and congestion avoidance to reduce the amount of data entering the network, thereby preventing any further congestion.

Congestion control is a technology for solving congestion owing to inputted traffic exceeding network equipment capacity or concentrated to a specific port where network equipment is being continuously overloaded.

Congestion control mechanisms of TCP beginning from TCP Tahoe in 1988 have been realized in various versions such as TCP Reno in 1990, up to TCP Vegas in 1995. The congestion control mechanisms of TCP have a basic algorithm including slow start, congestion avoidance and fast retransmit.

The main object of TCP congestion control is to directly control the transmission rate of a transmitting node in order to retransmit data corrupted due to congestion. TCP is a protocol belonging to 4th layer of an OSI reference model, and acts between terminal nodes irrespective of the number of nodes between transmitting and receiving nodes. TCP forms a loop having the transmitting and receiving nodes as both ends, and realizes a congestion control mechanism by adopting acknowledgment information transmitted from a transmitting side, window and timeout function to this loop.

TCP versions before TCP Tahoe established connection and started transmission by transmitting segments corresponding to window size advised from a receiving node. That is, if the widow size informed from the receiving node is larger than that of one segment, it is possible to transmit several segments. However, if congestion occurs or slow link exists between two terminal nodes, intermediate nodes or routers must buffer packets. However, if any of the routers have insufficient buffer capacity, packet loss takes place during the buffering. Thus, packet loss sharply lowers TCP processing rate owing to the delay for detecting the packet loss and the delay for retransmission. This is referred to as congestion collapse.

In order to solve congestion collapse, the principle of "conservation of packets" has been introduced. This principle means that currently set connection is in equilibrium, for example, in which a new packet is not transmitted before one packet is completely transmitted. Although it is theoretically impossible to have congestion from this state, congestion actually takes place in the Internet. There may be some reasons: For example, currently set connection has failed to reach equilibrium, a transmitting node has transmitted a new packet before one packet is completely transmitted, or equilibrium cannot be reached in current path owing to limited network sources.

"Slow start" is an algorithm designed for the situation where currently set connection has not reached equilibrium. This literally means that transmission is started at slow rate so that currently set connection reaches equilibrium. A transmitting node cannot transmit a new segment without receiving an "Ack" message from a receiving node, and the receiving node also cannot transmit an "Ack" message before receiving a segment from the transmitting node. Thus, the "Ack" message transmitted from the receiving node acts as a type of timer.

In case of transmitting segments of equal data size, transmission delay is heaviest when passing through a link of slow transmission rate and "Ack" takes place at an interval according to the delay. Thus, even though the transmitting node can transmit the segments at fast rate, a new segment cannot be transmitted without receiving "Ack."

Slow start adds a congestion window (cwnd) to conventional TCP. When segment loss takes placed due to congestion or at initial connection setting, the cwnd value is initialized to 1. The transmitting node determines the transmission window size from a smaller one of a window advised by the receiving node and the cwnd value.

Whenever the receiving node transmits an "Ack," the cwnd value increases by one. That is, when the transmitting node has established a new connection, transmitted one segment and received an "Ack" for the segment, the transmitting node can transmit two segments. Upon receiving an "Ack" for the two segments, the transmitting node can transmit 4 segments. Segments increase exponentially by 8, 16 and so on until reaching a slow start threshold (Wt) value where congestion avoidance operates.

Packet loss occurring between the transmitting and receiving nodes is caused by physical errors or insufficient buffer space during buffering owing to congestion. Recent development in transmission technologies and media has remarkably reduced the fraction of physical loss. So, most packet loss is induced by congestion. Of course, this assumption is not valid in a wireless link having a relatively high transmission error probability.

Congestion avoidance operates with a procedure of informing congestion and a procedure of reducing current network use in the event of congestion. Slow start and congestion avoidance operate together even through they are different algorithms.

When setting a new connection, an initial congestion window value is set to 1 segment. In the event of congestion, 1/2 of the current cwnd size is set to the Wt value. If congestion is caused by a timeout, the cwnd value becomes 1 again, that is- the slow start mode. Without congestion, the cwnd value continuously increases at different modes according to the current state, which may be a slow start cwnd or a congestion avoidance cwnd. In the slow start mode, whenever an "Ack" is received, the cwnd value is increased by one as described above until the cwnd value becomes equal to the currently set Wt value. If the cwnd value becomes equal to the currently set Wt value, it enters the congestion avoidance mode thereafter.

In the congestion avoidance mode, the cwnd value is increased by '1/cwnd' whenever an "Ack" is received. This can be referred to as a linear increment compared to an exponential cwnd increment in the slow start mode.

In receiving duplicate Ack's at the least retransmit threshold, the TCP retransmits a corresponding segment irrespective of a retransmit timer. This is referred to as a fast retransmit. In this case, duplicate Ack's may be generated by the transmission TCP, for example, where any Ack has not arrived before a timeout.

The retransmit timer is a timer included in the TCP in order to process segments discarded owing to loss or corruption. A retransmit time is defined as a time period for waiting for an Ack after having transmitted a segment. Upon transmitting a segment, the TCP operates the retransmit timer for the corresponding segment. When an Ack for the corresponding segment is received before the expiration of the timer, the timer terminates. When the timer time period has expired before the reception of an Ack, the corresponding segment is retransmitted and the timer is initialized.

For example, if the retransmit threshold value is 3, when three duplicated Acks are received, a transmitting node assumes that a corresponding segment is lost, and retransmits the corresponding segment.

Unlike congestion control in the wired network as described above, a relatively high Bit Error Rate (BEF) is found in a wireless link compared to a wired link. In addition, the bandwidth is limited and hand-off occurs frequently in a wireless link. Accordingly, while packet loss in the wired network is caused by congestion in an intermediate router, packet loss in an environment including a wireless link takes place owing to a high BER or hand-off.

For these reasons, a transmitting side has to transmit a packet at faster rate when packet loss occurs in a wireless link. However, a current TCP transmitting side assumes that packet loss in a wireless link is also caused by network congestion and executes a congestion control algorithm so as to decelerate the TCP transmission rate. This drastically degrades the TCP performance as well as lowering network efficiency.

The reason that performance degradation takes place when a congestion control algorithm used in a TCP protocol is applied as is to a wired-wireless integrated network is as follows. First, data is transmitted from a CN to an MN. The MN transmits corresponding data in response to the data from the CN. However, as packet collapse takes place in a wireless link, the CN fails to receive an "Ack" packet during a time-out period. Then, the CN misunderstands that the network is congested, and thus operates the congestion control algorithm to start at a low rate as well as invoking the congestion avoidance algorithm to reset the size of a congestion window to 1.

As described above, the congestion window value is the maximum number of packets that can be transmitted in TCP without any response from a correspondent. So, when a congestion window value becomes smaller, the TCP transmission rate also decreases and the TCP performance degrades in proportion to the congestion window value. In the CN, a response to the transmitted data also collapses during the wireless link. If an "Ack" packet is not received within the time-out period, the congestion control algorithm operates to degrade the TCP performance of the MN also.

Therefore, when the TCP congestion control algorithm common in the prior art is applied to the wired-wireless integrated network, even though an actual network does not have congestion, the TCP performance becomes poor owing to the high packet loss rate of the wireless network. This makes it necessary to improve the TCP congestion control algorithm in a network containing a wireless link.

## SUMMARY OF THE INVENTION

It is therefore an object of the present invention to provide a system and a method for TCP congestion control using multiple TCP acknowledgments by which a TCP congestion control mechanism is modified so that an MN, upon receiving a corrupted packet, generates and transmits a multiple TCP acknowledgment to a transmitting node and the transmitting node accordingly executes a TCP transmission in order to promptly reduce TCP performance degradation.

According to one aspect of the present invention for realizing the above objects, a method of Transport Control Protocol (TCP) congestion control using multiple TCP AKCs in an integrated network including wireless links is provided, the method comprising: receiving a packet retransmitted from a correspondent upon a mobile node having a packet loss in a received packet; calculating the number of acknowledgment messages to be transmitted by the mobile node; generating multiple acknowledgment messages according to the calculated number and transmitting the multiple acknowledgment messages to a transmitting node; and increasing a congestion window value corresponding to the multiple acknowledgment messages received by the transmitting node, and executing the TCP transmission.

The receiving, calculating, transmitting, increasing, and executing are preferably effected irrespective of network layer protocol.

The network layer protocol preferably comprises at least one protocol selected from a group consisting of Internet Protocol (IP), Internet Protocol version 6 (IPv6), wireless IP and Mobile IPv6 (MIPv6).

Generating multiple acknowledgment messages comprises: comparing a sequence number contained in a TCP header of a currently received packet with a current maximum sequence number, the current maximum sequence number being the largest number among sequence numbers of packets that have already been received; and updating the sequence number of the currently received packet as a new maximum sequence number upon the sequence number of the currently received packet being larger than the current maximum sequence number, and generating multiple acknowledgment pack-ets upon the sequence number of the currently received packet being equal to or smaller than the current maximum sequence number.

Generating multiple acknowledgment packets comprises: calculating an expected sequence number, the expected sequence number being a sequence number of a next packet expected by the mobile node; calculating an acknowledgment data length, the acknowledgment data length being an entire length of the multiple acknowledgment packets to be transmitted by the mobile node; determining the number of the acknowledgment packets to be generated and transmitted by the mobile node; equally dividing a packet range from the last acknowledgment sequence to the expected sequence number into packet sections corresponding to the number of acknowledgment packets and calculating individual acknowledgment number field values according to the divided acknowledgment packet sections; and generating individual acknowledgment packets according to the calculated individual acknowledgment number field values and transmitting the individual acknowledgment packets to the transmitting node.

The acknowledgment data length is preferably determined by subtracting the last acknowledgment sequence from the expected sequence number.

The expected sequence number is preferably calculated using a sequence number of a received TCP packet, a data length and receiving buffer information of a TCP control block.

The number of acknowledgment packets is preferably determined by dividing a advertised window value with a maximum segment size, the advertised window value being a receiving buffer size currently available for the mobile node, and the maximum segment size being a maximum data size that the mobile node can receive.

The individual acknowledgment number field values preferably have the last sequence number as an initial value, and preferably vary while increasing to a predetermined size until the acknowledgment number field values become equal to the expected sequence number.

The predetermined size is preferably determined by dividing the acknowledgment data length by the number of acknowledgment packets.

According to another aspect of the present invention for realizing the above objects, a method of Transport Control Protocol (TCP) congestion control using multiple TCP AKCs in an integrated network including wireless links is provided, the method comprising: comparing, at a mobile node, a sequence number contained in a TCP header of a currently received packet with a current maximum sequence number which has already been received to determine whether or not there is TCP packet loss in the network, the maximum sequence number being a largest sequence number of packets; and upon a determination that there has been a TCP packet loss, calculating an expected sequence number, the expected sequence number being a sequence number of a next packet expected by the mobile node; calculating an acknowledgment data length, the acknowledgment data length being an entire length of multiple acknowledgment packets to be transmitted by the mobile node; determining the number of acknowledgment packets to be generated and transmitted by the mobile node; equally dividing a packet range from the last acknowledgment sequence to the expected sequence number into packet sections corresponding to the number of acknowledgment packets and calculating individual acknowledgment number field values according to the divided acknowledgment packet sections; and generating individual acknowledgment packets according to the calculated individual acknowledgment number field values and transmitting the individual acknowledgment packets to a transmitting node.

The method is preferably effected irrespective of network layer protocol.

The network layer protocol preferably comprises at least one protocol selected from a group consisting of Internet Protocol (IP), Internet Protocol version 6 (IPv6), wireless IP and Mobile IPv6 (MIPv6).

According to yet another aspect of the present invention for realizing the above objects, a mobile node, located in an integrated network which includes wireless links and effects communication using Transport Control Protocol (TCP), and adapted to perform a TCP congestion control method comprising: comparing a sequence number contained in a TCP header of a currently received packet with a current maximum sequence number which have already been received to determine whether or not there has been a TCP packet loss in the network, the maximum sequence number being a largest number of sequence numbers of packets; upon a determination that there has been a TCP packet loss, calculating: an expected sequence number, the expected sequence number being a sequence number of a next packet expected by the mobile node; an acknowledgment data length, the acknowledgment data length being an entire length of multiple acknowledgment packets to be transmitted by the mobile node and the number of the acknowledgment packets to be generated and transmitted by the mobile node; equally dividing a packet range from the last acknowledgment sequence to the expected sequence number into packet sections corresponding to the number of acknowledgment packets and calculating individual acknowledgment number field values according to the divided acknowledgment packet sections; and generating individual acknowledgment packets according to the calculated individual acknowledgment number field values and transmitting the individual acknowledgment packets to a transmitting node.

The acknowledgment data length is preferably determined by subtracting the last acknowledgment sequence from the expected sequence number.

The number of the acknowledgment packets is preferably determined by dividing a advertised window value by a maximum segment size, the advertised window value being a receiving buffer size currently available for the mobile node, and the maximum segment size being a maximum data size that the mobile node can receive.

The individual acknowledgment number field values preferably have the last sequence number as an initial value, and preferably vary while increasing to a predetermined size until the acknowledgment number field values become equal to the expected sequence number.

The predetermined size is preferably determined by dividing the acknowledgment data length by the number of the acknowledgment packets.

According to still another aspect of the present invention for realizing the above objects, a node, located in an integrated network which includes wireless links and effects communication using Transport Control Protocol (TCP), and adapted to perform a TCP congestion control method is provided, the method comprising: receiving multiple acknowledgment messages from a correspondent mobile node that generates and transmits the multiple acknowledgment messages in response to a packet loss; increasing a congestion window value corresponding to the multiple acknowledgment messages received by the mobile node; and effecting a TCP transmission.

According to yet another aspect of the present invention for realizing the above objects, a system, located in an integrated network which includes wireless links and performs Transport Control Protocol (TCP) congestion control is provided, the system comprising: a receiving node adapted to receive a packet retransmitted from a correspondent upon a mobile node having a packet loss in a received packet, to calculate the number of acknowledgment messages to be transmitted, to generate multiple acknowledgment messages according to the calculated number, and to transmit the multiple acknowledgment messages to the correspondent; and a transmitting node adapted to receive the multiple acknowledgment messages from the receiving node, to increase a congestion window value corresponding to the received multiple acknowledgment messages, and to effect a TCP transmission.

The method of multiple TCP ACK generation in accordance with the present invention can simply and effectively compensate TCP performance degradation owing to hand-off and be easily applied to a mobile node.

BRIEF DESCRIPTION OF THE DRAWINGS

A more complete appreciation of the present invention, and many of the attendant advantages thereof, will be readily apparent as the present invention becomes better understood by reference to the following detailed description when considered in conjunction with the accompanying drawings, in which like reference symbols indicate the same or similar components, wherein:

FIG. 1 is a view of a packet loss procedure where a common TCP congestion control algorithm is applied to a wired-wireless integrated network;

FIG. 2 is a view of a general structure of a wired-wireless integrated network to which the present invention is applied;

FIG. 3 is a view of an operation protocol stack in a multiple TCP acknowledgment method according to an embodiment of the present invention;

FIG. 4 is a view of a multimedia service control flow according to an embodiment of the present invention;

FIG. 5 is a view of a detailed process flow in an MTAG module of an MN according to an embodiment of the present invention; and

FIG. 6 is a view of an MTAG module process according to an embodiment of the present invention.

DETAILED DESCRIPTION OF THE INVENTION

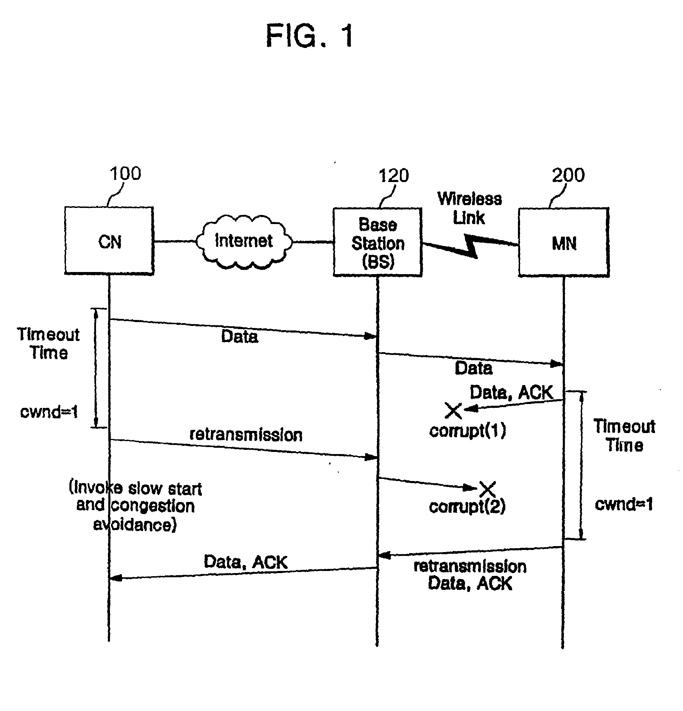

FIG. 1 is a view of a packet loss procedure where a common TCP congestion control algorithm is applied to a wired-wireless integrated network.

That is, FIG. 1 is a view of the reason that performance degradation takes place when a congestion control algorithm used in TCP protocol is applied as is to a wired-wireless integrated network. First, data is transmitted from a CN to an MN. The MN transmits corresponding data in response to the data from the CN. However, as packet collapse (Corrupt 1) takes place in the wireless link, the CN fails to receive an "Ack" packet during a time-out period. Then, the CN 1 misunderstands that the network is congested, and invokes the congestion control algorithm to start at a low rate as well as the congestion avoidance algorithm to reset the size of a congestion window to 1.

As described above, the congestion window value is the maximum number of packets that can be transmitted in TCP without any response from a correspondent. So, when the congestion window value becomes smaller, the TCP transmission rate also decreases and the TCP performance degrades in proportion to the congestion window value. In the CN, a response to the transmitted data is also collapsed (Corrupt 2) during the wireless link. If an "Ack" packet is not received within the time-out period, the congestion control algorithm operates to degrade the TCP performance of the MN also.

Exemplary embodiments of the present invention are described in detail below with reference to the accompanying drawings.

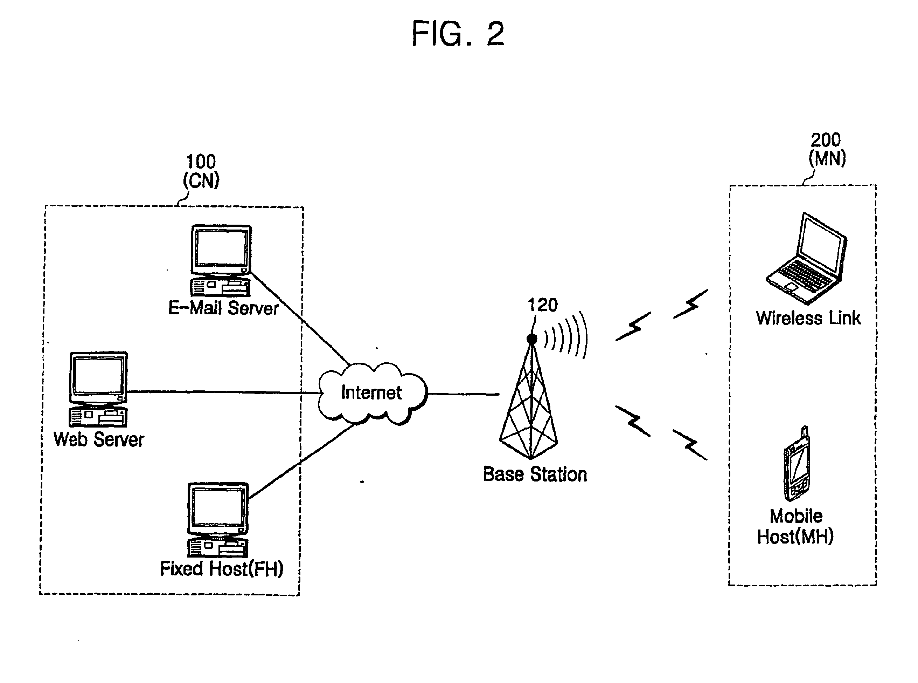

FIG. 2 is a view of a general structure of a wired-wireless integrated network to which the present invention is applied.

As shown in FIG. 2, the wired-wireless integrated network is connected, at the left side, to wired link via the Internet and, at the right side, to wireless link represented by a mobile communication network.

MNs 200 represent Mobile Nodes located in a wireless network of the wired-wireless integrated network in FIG. 2, and examples thereof may include a mobile host or a mobile notebook computer as shown in FIG. 2. The MNs 200 interface with the Internet via a base station 120.

Correspondent Nodes (CNs) 100 designate correspondent TCP peer nodes. While the CNs 200 can be MNs or fixed nodes, they are expressed only as fixed nodes in the FIG. 2 network. The CNs 100 in FIG. 2 can be any element selected from the group consisting of an E-mail server, a web server and a fixed host that are connected to the wired link.

It is assumed that the MNs 200 and the CNs 100 of the FIG. 2 network to which the present invention is applied execute TCP communication, and exemplary embodiments of the present invention described later assume that the CNs 100 act as a transmitting side to transmit TCP packets to the MNs 200 acting as a receiving side.

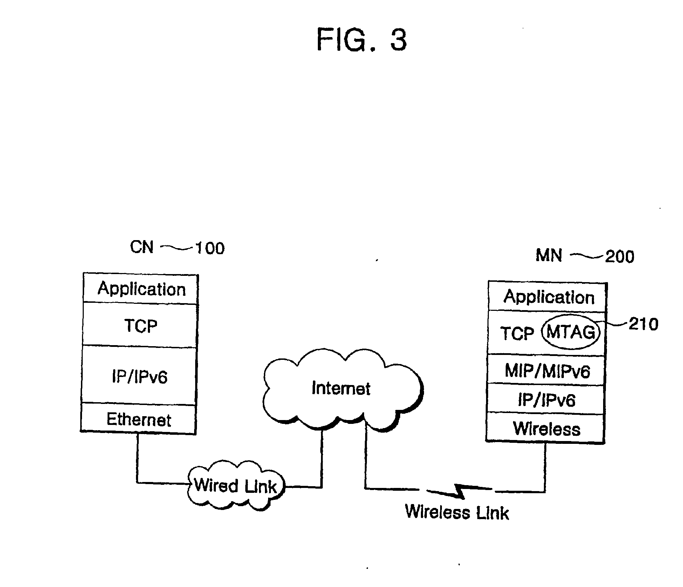

FIG. 3 is a view of an operation protocol stack in a multiple TCP acknowledgment method according to an embodiment of the invention.

In other words, FIG. 3 is a view of the location of a Multiple TCP ACK Generation (MTAG) module 210 for providing a multiple acknowledgment method in accordance with an embodiment of the present invention in a TCP/IP layer model.

The TCP/IP layer model has hardware for physically transmitting data in a lowest layer, and a network interface (data link) layer located in a higher layer than the hardware. The network interface layer acts as an interface for communication through a data link such as Ethernet.

A network layer (Internet layer), in a higher layer than the network interface layer, uses an IP protocol. IP protocol transmits packets according IP addresses. Since it is assumed that a CN 100 is connected to a fixed network, IP, IPv6 and so on may be used in the CN 100. An MN 200 can use IP/IPv6 as well as Mobile IP (MIP)/MIPv6 for wireless environment.

A transport layer exists in a higher layer than the network layer. The most important function of the transport layer is to enable communication between application programs. The MTAG module 210 is located in the transport layer. Since it is assumed that the MN 200 acts as a receiving side in exemplary embodiments of the present invention, the MTAG module 210 exists in the transport layer of the MN 200. In both the CN 100 and the MN 200, an application layer exists in a higher layer than the transport layer.

As shown in FIG. 3, the multiple TCP ACK's generation method is applied to the processing of a received packet in a TCP layer of the MN 200. The MN 200 includes the MTAG module 210 for implementing the multiple TCP ACK's generation method. The MTAG module 210 corrects and supplements TCP congestion control protocol so that TCP performance degradation owing to a hand-off can recover promptly.

As seen from FIG. 3, the multiple TCP ACK's generation method can be applied to all IPv4/IPv6 environments, that is, protocols used in network layers. In other words, the multiple TCP ACK's generation method in accordance with an embodiment of the present invention operates in the TCP layer of the MN, and thus is independent of network layer protocol.

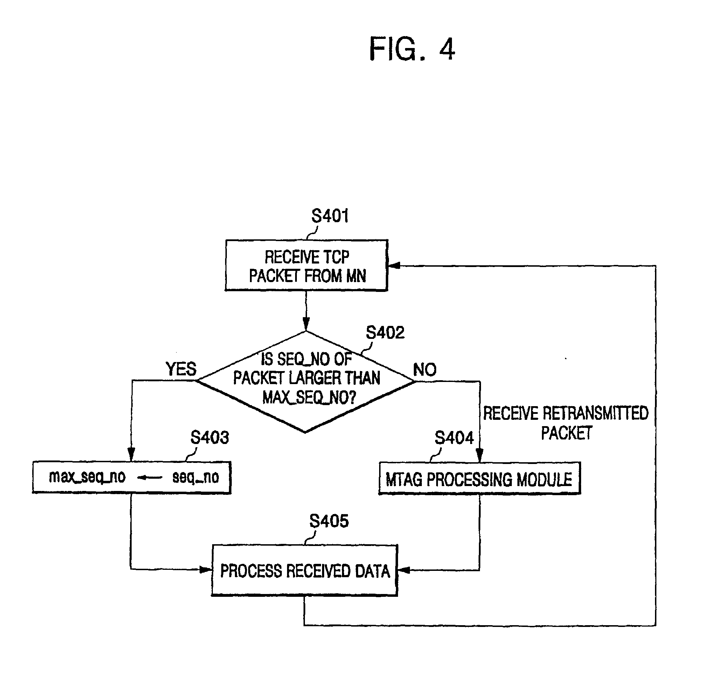

FIG. 4 is a view of received packet processing of an MN according to the multiple TCP ACK's generation method.

A variable of maximum sequence number (max_seq_no) is set in a TCP layer of the MN 200 for the purpose of storing the maximum sequence number of packets which have been received so far. When the MN 200 receives a TCP packet from the CN 100 in S401, the MN 200 compares the sequence number field (seq_no) value of the TCP header of the received packet with the maximum sequence number in S402. If the sequence number of the received packet is larger than the maximum sequence number, the MN 200 assumes that a normal packet has been received, and resets the sequence number of the currently received packet by the maximum sequence number in S403. That is, the MN 200 updates the sequence number of the normally received packet to the maximum sequence number, and provides the normally received packet to a received data processing step in S405.

Herein, TCP segment sequence number indicates a sequence number designated to the first byte of data included in a corresponding TCP segment. In order to ensure a reliable connection, TCP allocates each forwarded byte with a sequence number informing a destination TCP that the first byte of the segment corresponds to this sequence number.

If the sequence number of a received packet is equal to or smaller than the maximum sequence number, this means that a retransmitted packet has been received. Packet retransmission occurs because packet loss has been caused by a wireless link error and thus a retransmit timer in a transmitting TCP has expired. In case of retransmission in a TCP layer of a CN, a congestion window value decreases to 1 or 1/2, and the TCP transmission rate also decreases. The packet retransmitted from the CN is processed by an MTAG processing module of a TCP layer in the MN side in S404.

The MTAG module generates and transmits a multiple ACK packet to the CN, and then provides the received packet to a received data processing step in S405. That is, the MTAG module generates a number of TCP ACK packets to respond to new data as ACK packets which will be transmitted by the TCP layer of the MN, and transmits the TCP ACK packets to the CN so that the congestion window value of the CN recovers promptly to the value before hand-off.

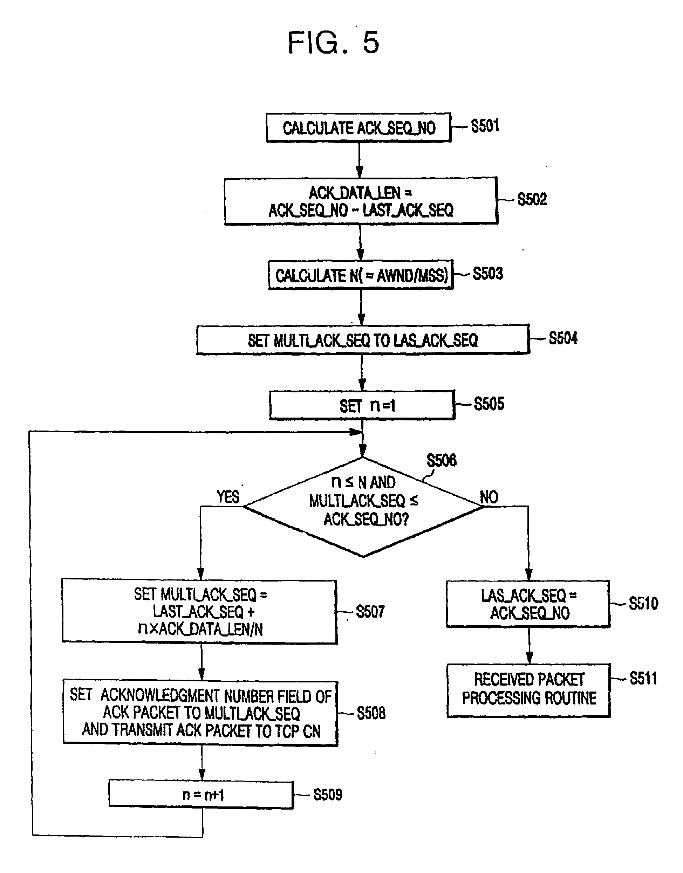

FIG. 5 is a view of a detailed process flow in an MTAG module of an MN according to an embodiment of the present invention.

Since essential operations of the MTAG module 210 has been described hereinbefore, more detailed and specified operations of the MTAG module 210 are described further with reference to FIG. 5.

First, the MTAG module uses variables as follows:

Expected sequence number (ack_seq_no): Sequence number of next packet expected by the MN;

Last acknowledgment sequence (last_ack_seq): Acknowledgment number field value of a TCP ACK packet finally transmitted by the MN;

Acknowledgment data length (ack_data_len): Entire length of ACK packets to be transmitted by the MN to the CN;

Multiple acknowledgment sequence (multi_ack_seq): Acknowledgment number field value of ACK packets to be transmitted by the MN to the CN;

N: Number of ACK packets to be generated and transmitted by the MN.

By using the above variables, the MTAG module 210 operates as in FIG. 5.

In order to generate a number of valid ACK packets instead of transmitting an ACK packet, a next expected sequence number is calculated using the sequence number of a TCP packet received with priority, and the data length and receiving buffer information of a TCP control block in S501. Herein, the expected sequence number calculation is executed according to a conventional TCP method. However, a specific calculation method is not proposed by the present invention.

When ack_seq_no is produced, ack_data_len can be produced by subtracting last_ack_seq from ack_seq_no in S502. That is, this can be expressed as "ack_data_len = ack_seq_no - last_ack_seq."

Detennining ack_data_len, that is, the entire data length of ACK packets to be transmitted by the receiving TCP, is determining the number of groups to divide the ACK packets into for transmission. N is needed for this procedure.

As defined above, N indicates the number of ACK packets to be generated and transmitted by the MN 200.

N is not determined randomly, but is determined by dividing an advertised window (awnd) by a Maximum Segment Size (MSS) in S503. That is, N is determined based upon a receiving buffer size available for the MN 200 because a number of ACK packets can cause network congestion if generated and transmitted randomly.

As a value forwarded by the receiving TCP to the transmitting TCP, awnd designates the receiving buffer size currently available for the MN 200. MMS is a TCP header option defining the maximum size of data that a destination can receive. MMS is determined during the establishment of a connection between the transmitting and receiving sides. The maximum data size is determined by the receiving side rather than by the transmitting side.

Upon having determined the number N of ACK packets to be transmitted by the MN 200, it is necessary to determine the field contents to be included in each of the ACK packets to be transmitted.

First, a range [last_ack_seq, ack_seq_no] from last_ack_seq to ack_seq_no is divided into total N sections. Then, multi_ack_seq is set las_ack_seq in S504, and the variable n is set to "1" as initialization in S505. In this case, multi_ack_seq is inserted to an acknowledgment number field in following procedures, and produced by using last_ack_seq and variables n and N.

After the initialization for multi_ack_seq and the variable n, the acknowledgment numbers of the individual ACK packets to be transmitted are calculated by using multi_ack_seq under the condition that n is equal to or smaller than N (n = N) and multi_ack_seq is equal to or smaller than ack_seq_no (multi_ack_seq = ack_seq_no) in S506, and the ACK packets are transmitted accordingly.

The value of multi_ack_seq needed in this procedure can be expressed as Equation 1 below in S507.

$$\text{multi\_ack\_seq} = \text{last\_ack\_seq} + n \times \text{ack\_data\_len}/N \quad ...... \text{ Equation 1.}$$

Herein, n has an initial value of "1" and N is the number of ACK packets to be transmitted by the MN 200 as described above.

When multi_ack_seq is produced, multi_ack_seq is substituted for the acknowledgment number field of an ACK packet, and the corresponding ACK packet is transmitted to the TCP transmitting CN in S508. After one ACK packet has been transmitted, n is increased by 1 in S509, and the above steps of S506 to S590 are repeated.

That is, the MN 200 divides the value of a range from last_ack_seq to ack_seq_no into N sections, sets multi_ack_seq as the acknowledgment number of ACK packets while increasing multi_ack_seq by ack_data_len/N until multi_ack_seq is equal to ack_seq_no, and then generates and transmits a total of N ACK packets to the CN 100.

When the MN 200 has transmitted all ACK packets to be transmitted, the condition of n = N and multi_ack_seq = ack_seq_no is not satisfied in S506. Then, las_ack_seq is updated to ack_seq_no in S510, and a received packet processing routine is started in S511.

Herein, the acknowledgement number defines a byte number that a transmitting node of a TCP segment is about to receive from a correspondent node. If the receiving node, upon receiving a segment, has successfully received byte number x, a receiver defines the acknowledgment number as x+1.

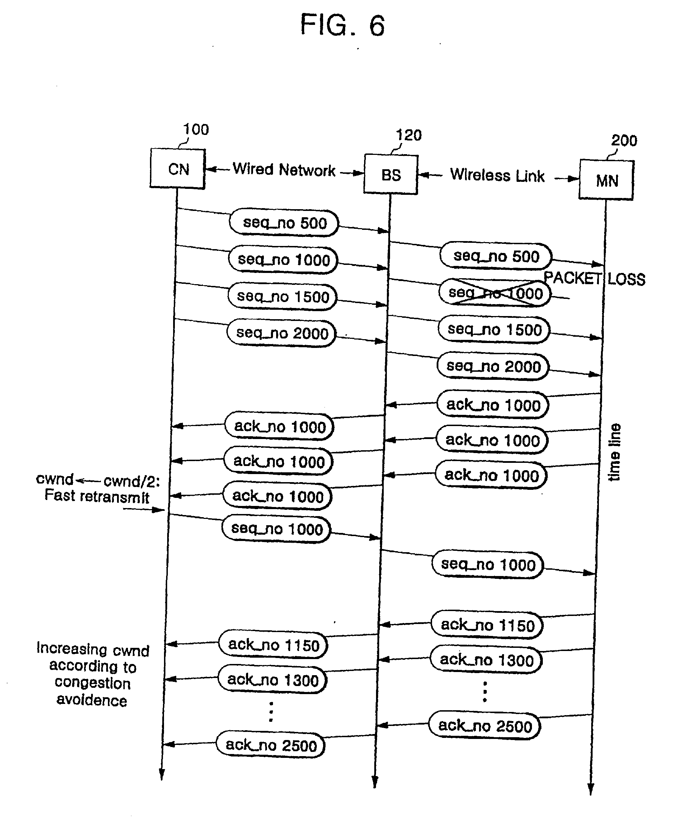

FIG. 6 is a view of an exemplary embodiment of an MTAG module process according to the present invention.

In FIG. 6, it is assumed that packet loss occurs owing to hand-off or wireless link characteristics and a TCP retransmit timer of a CN 100 has expired so that a CN 100 retransmits a packet to cope with the packet loss.

It is assumed that while TCP packet transmission is being carried out by the CN 100 to an MN 200, packets after sequence number 1000 are lost owing to hand-off in a wireless link section from a base station 120 to the MN 200. The CN 100 resets the congestion window to 1 segment again owing to the expiration of the retransmit timer, and retransmits packets from that of sequence number 1000. The MN 200 receives the retransmitted packets from the CN 100, and analyzes sequence numbers of the received packets. Since those packets of sequence numbers 1500 and 2000 have been received already, ack_seq_no is 2500 and last_ack_seq is 1000.

In the embodiment of FIG. 6, if awnd is 5000 bytes and MSS is a TCP header option defining the maximum size of data that a destination can receive to be 500, the number N of acknowledgment packets to be transmitted is calculated as follows:

$$N = \text{awnd}/\text{MSS} = 5000/50 = 10$$

Thus, the MN 200 divides packets in sequence number [1000, 2500] sections by N, and transmits the packets having ACK numbers of 1150, 1300, 1450, ... and 2500 to the CN 100. When the CN 100 receives a new ACK, the cwnd value increases by one according to slow start mode at an early stage. When the cwnd value exceeds a slow start threshold, a congestion avoidance algorithm is applied to increment the cwnd value.

As described above, the present invention allows a receiving side MN to transmit a multiple acknowledgment packet in order to promptly recover TCP transmission degradation owing to TCP packet loss in a wireless environment without having to change a TCP layer of a fixed node irrespective of the network layer of the nodes.

While the present invention has been shown and described in connection with exemplary embodiments, it will be apparent to those skilled in the art that modifications and variations can be made without departing from the spirit and scope of the invention as defined by the appended claims.

**Claims**

1. A method of Transport Control Protocol (TCP) congestion control using multiple TCP AKCs in an integrated network including wireless links, the method comprising:

   receiving a packet retransmitted from a correspondent upon a mobile node having a packet loss in a received packet;
   calculating the number of acknowledgment messages to be transmitted by the mobile node;
   generating multiple acknowledgement messages according to the calculated number and transmitting the multiple acknowledgement messages to a transmitting node; and
   increasing a congestion window value corresponding to the multiple acknowledgment messages received by the transmitting node, and executing the TCP transmission.

2. The method according to claim 1, wherein the receiving, calculating, transmitting, increasing, and executing are effected irrespective of network layer protocol.

3. The method according to claim 2, wherein the network layer protocol comprises at least one protocol selected from a group consisting of Internet Protocol (IP), Internet Protocol version 6 (IPv6), wireless IP and Mobile IPv6 (MIPv6).

4. The method according to claim 1, wherein generating multiple acknowledgment messages comprises:

   comparing a sequence number contained in a TCP header of a currently received packet with a current maximum sequence number, the current maximum sequence number being the largest number among sequence numbers of packets that have already been received; and
   updating the sequence number of the currently received packet as a new maximum sequence number upon the sequence number of the currently received packet being larger than the current maximum sequence number, and
   generating multiple acknowledgment packets upon the sequence number of the currently received packet being equal to or smaller than the current maximum sequence number.

5. The method according to claim 4, wherein generating multiple acknowledgment packets comprises:

   calculating an expected sequence number, the expected sequence number being a sequence number of a next packet expected by the mobile node;
   calculating an acknowledgment data length, the acknowledgment data length being an entire length of the multiple acknowledgment packets to be transmitted by the mobile node;
   determining the number of the acknowledgment packets to be generated and transmitted by the mobile node;
   equally dividing a packet range from the last acknowledgment sequence to the expected sequence number into packet sections corresponding to the number of acknowledgment packets and calculating individual acknowledgment number field values according to the divided acknowledgment packet sections; and
   generating individual acknowledgment packets according to the calculated individual acknowledgment number field values and transmitting the individual acknowledgment packets to the transmitting node.

6. The method according to claim 5, wherein the acknowledgment data length is determined by subtracting the last acknowledgment sequence from the expected sequence number.

7. The method according to claim 6, wherein the expected sequence number is calculated using a sequence number of a received TCP packet, a data length and receiving buffer information of a TCP control block.

8. The method according to claim 5, wherein the number of acknowledgment packets is determined by dividing a advertised window value with a maximum segment size, the advertised window value being a receiving buffer size currently available for the mobile node, and the maximum segment size being a maximum data size that the mobile node can receive.

9. The method according to claim 5, wherein the individual acknowledgment number field values have the last sequence number as an initial value, and vary while increasing to a predetermined size until the acknowledgment number field values become equal to the expected sequence number.

10. The method according to claim 9, wherein the predetermined size is determined by dividing the acknowledgment data length by the number of acknowledgment packets.

11. A method of Transport Control Protocol (TCP) congestion control using multiple TCP AKCs in an integrated network including wireless links, the method comprising:

comparing, at a mobile node, a sequence number contained in a TCP header of a currently received packet with a current maximum sequence number which has already been received to determine whether or not there is TCP packet loss in the network, the maximum sequence number being a largest sequence number of packets; and
upon a determination that there has been a TCP packet loss,
calculating an expected sequence number, the expected sequence number being a sequence number of a next packet expected by the mobile node;
calculating an acknowledgment data length, the acknowledgment data length being an entire length of multiple acknowledgment packets to be transmitted by the mobile node;
determining the number of acknowledgment packets to be generated and transmitted by the mobile node;
equally dividing a packet range from the last acknowledgment sequence to the expected sequence number into packet sections corresponding to the number of acknowledgment packets and calculating individual acknowledgment number field values according to the divided acknowledgment packet sections; and
generating individual acknowledgment packets according to the calculated individual acknowledgment number field values and transmitting the individual acknowledgment packets to a transmitting node.

12. The method according to claim 11, wherein the method is effected irrespective of network layer protocol.

13. The method according to claim 11, wherein the network layer protocol comprises at least one protocol selected from a group consisting of Internet Protocol (IP), Internet Protocol version 6 (IPv6), wireless IP and Mobile IPv6 (MIPv6).

14. A mobile node, located in an integrated network which includes wireless links and effects communication using Transport Control Protocol (TCP), and adapted to perform a TCP congestion control method comprising:

comparing a sequence number contained in a TCP header of a currently received packet with a current maximum sequence number which have already been received to determine whether or not there has been a TCP packet loss in the network, the maximum sequence number being a largest number of sequence numbers of packets;
upon a determination that there has been a TCP packet loss, calculating:

an expected sequence number, the expected sequence number being a sequence number of a next packet expected by the mobile node;
an acknowledgment data length, the acknowledgment data length being an entire length of multiple acknowledgment packets to be transmitted by the mobile node and the number of the acknowledgment packets to be generated and transmitted by the mobile node;
equally dividing a packet range from the last acknowledgment sequence to the expected sequence number into packet sections corresponding to the number of acknowledgment packets and calculating individual acknowledgment number field values according to the divided acknowledgment packet sections; and
generating individual acknowledgment packets according to the calculated individual acknowledgment number field values and transmitting the individual acknowledgment packets to a transmitting node.

15. The mobile node according to claim 14, wherein the acknowledgment data length is determined by subtracting the last acknowledgment sequence from the expected sequence number.

16. The mobile node according to claim 14, wherein the number of the acknowledgment packets is determined by dividing a advertised window value by a maximum segment size, the advertised window value being a receiving buffer size currently available for the mobile node, and the maximum segment size being a maximum data size that the mobile node can receive.

17. The mobile node according to claim 14, wherein the individual acknowledgment number field values have the last sequence number as an initial value, and vary while increasing to a predetermined size until the acknowledgment number field values become equal to the expected sequence number.

18. The mobile node according to claim 17, wherein the predetermined size is determined by dividing the acknowledgment data length by the number of the acknowledgment packets.

19. A node, located in an integrated network which includes wireless links and effects communication using Transport Control Protocol (TCP), and adapted to perform a TCP congestion control method comprising:

   receiving multiple acknowledgment messages from a correspondent mobile node that generates and transmits the multiple acknowledgment messages in response to a packet loss;
   increasing a congestion window value corresponding to the multiple acknowledgment messages received by the mobile node; and
   effecting a TCP transmission.

20. A system, located in an integrated network which includes wireless links and performs Transport Control Protocol (TCP) congestion control, the system comprising:

   a receiving node adapted to receive a packet retransmitted from a correspondent upon a mobile node having a packet loss in a received packet, to calculate the number of acknowledgment messages to be transmitted, to generate multiple acknowledgement messages according to the calculated number, and to transmit the multiple acknowledgement messages to the correspondent; and
   a transmitting node adapted to receive the multiple acknowledgement messages from the receiving node, to increase a congestion window value corresponding to the received multiple acknowledgment messages, and to effect a TCP transmission.

# FIG. 1

# FIG. 2

EP 1 691 526 A1

# FIG. 3

CN ~100

| Application |
| :---: |
| TCP |
| IP/IPv6 |
| Ethernet |

MN ~200

| Application | |
| :---: | :--- |
| TCP (MTAG) | ~210 |
| MIP/MIPv6 | |
| IP/IPv6 | |
| Wireless | |

Internet

Wired Link

Wireless Link

# FIG. 4

S401
RECEIVE TCP
PACKET FROM MN

S402
IS SEQ_NO OF
PACKET LARGER THAN
MAX_SEQ_NO?

YES

NO

RECEIVE RETRANSMITTED
PACKET

S403
max_seq_no ←— seq_no

S404
MTAG PROCESSING MODULE

S405
PROCESS RECEIVED DATA

EP 1 691 526 A1

15

# FIG. 5

CALCULATE ACK_SEQ_NO — S501

ACK_DATA_LEN = ACK_SEQ_NO - LAST_ACK_SEQ — S502

CALCULATE N( = AWND/MSS) — S503

SET MULTLACK_SEQ TO LAS_ACK_SEQ — S504

SET n=1 — S505

n ≤ N AND MULTLACK_SEQ ≤ ACK_SEQ_NO? — S506

YES

SET MULTLACK_SEQ = LAST_ACK_SEQ + n×ACK_DATA_LEN/N — S507

SET ACKNOWLEDGMENT NUMBER FIELD OF ACK PACKET TO MULTLACK_SEQ AND TRANSMIT ACK PACKET TO TCP CN — S508

n = n+1 — S509

NO

LAS_ACK_SEQ = ACK_SEQ_NO — S510

RECEIVED PACKET PROCESSING ROUTINE — S511

# FIG. 6

**European Patent Office**

**EUROPEAN SEARCH REPORT**

Application Number

EP 06 00 1762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/122385 A1 (BANERJEE DEBARAG N) 5 September 2002 (2002-09-05) * page 1, paragraph 6 * * page 1, paragraph 9 * * page 2, paragraph 15 * * page 3, paragraph 18 - paragraph 20; claims 1,6,9,10,16 * ----- | 1-20 | H04L29/06 H04L12/56 |
| | | | TECHNICAL FIELDS SEARCHED (IPC) H04L |

The present search report has been drawn up for all claims

| Place of search | Date of completion of the search | Examiner |
|---|---|---|
| The Hague | 8 March 2006 | Karavassilis, N |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

......................................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 06 00 1762

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2006

| Patent document cited in search report | Publication date | Patent family member(s) | Publication date |
|---|---|---|---|
| US 2002122385 A1 | 05-09-2002 | NONE | |

EPO FORM P0459

For more details about this annex : see Official Journal of the European Patent Office, No. 12/82